Europäisches Patentamt

European Patent Office

Office européen des brevets

(19)

(11) Publication number: **0 232 588**
A2

# EUROPEAN PATENT APPLICATION

(21) Application number: 86308449.7

(22) Date of filing: 30.10.86

(51) Int. Cl.⁴: **G 11 B 5/00,** G 11 B 5/09,
**G 11 B 5/48**

(30) Priority: 03.01.86 US 815933

(71) Applicant: **Lemelson, Jerome Hal, 48 Parkside Drive,
Princeton New Jersey 08540 (US)**

(43) Date of publication of application: **19.08.87
Bulletin 87/34**

(72) Inventor: **Lemelson, Jerome Hal, 48 Parkside Drive,
Princeton New Jersey 08540 (US)**

(74) Representative: **Everitt, Christopher James Wilders et
al, F.J. CLEVELAND & COMPANY 40/43 Chancery Lane,
London WC2A 1JQ (GB)**

(84) Designated Contracting States: **DE FR GB NL**

(54) **Magnetic recording and reproduction apparatus, system & method.**

(57)  For effecting high density magnetic recordings on a magnetic record member (50) coated with magnetic recording material, a plurality of different recordings may be provided as overlapping domains along a single select magnetic record track, thus multiplying the total amount of information which may be recorded along each record track of multiple track record member (50). A magnetic transducer (17) mounted on a support (35) is pivotally driven to variably align its pole pieces and recording or reproduction gaps with a select record track of a record member (50) to provide respective recordings, the domains of each of which are differently aligned from the domains of the others, permitting such different recording to overlap along the same length of the same track and to be discretely detected by suitably aligned pickups.

0232588

- 2 -

## Summary of The Invention

This invention relates to an apparatus and method for transducing information by recording and/or reproducing digital signals with respect to selected tracks of magnetic record tapes, discs, cards, drums or the like and particularly to improvements defined by magnetic domains and their alignment with respect to the axial direction of the magnetic record track along which a plurality of recordings or programs are magnetically impressed by forming or varying the axes of such magnetic domains. In conventional magnetic transducing with respect to magnetic tracks of magnetic tape and the like, pulse recordings of data are provided as shifts in a direction of magnetic domains along the track axis. Such domain shifts or angulations are effected at spaced-apart locations of the magnectic track of the record member, each of which defines a bit or pulse recording wherein all of such domain shifts occur at the same angle to the longitudinal axis of the track such that the domains extend parallel to each other in a manner to define, for example, the binary notations "0" or "1". The result is a binary-type series of code recordings longitudinally along the track, which bit or pulse recordings define a particular program or information recording in coded or so-called digital form. Such digital recordings are provided as discrete magnetic domains which are formed when the magnetic recording transducer is operatively aligned and in engagement with or close to a select portion or track of a magnetic recording member, such as a magnetic tape, disc, card or drum as relative movement occurs between the transducer and the recording member while the transducer is selectively energized or pulsed with information signal information such as generated by a computer or other device such as a television camera or memory. Such conventional so-called horizontal magnetic signal recording is effected in a manner wherein recording densities of between 20,000 and 40,000 bits per inch may be achieved without difficulty employing conventional horizontal recording techniques. The instant invention provides means for substantially increasing such recording density by what is termed herein as "overlap-recording", a process in which two or more recordings of data, such as digital data, are provided along the same length of the same record track or along very closely spaced separate record tracks with very little, if any guard

- 4 -

band areas therebetween, wherein each recording is composed of respective longitudinal arrays of singly aligned magnetic domains or groups thereof which overlap or are overlapped by the domains or domain groups of the other recording or recordings. By respectively angulating the magnetic recording transducers for each recording to provide the domains of each recording made thereby extending at a different angle with respect to the longitudinal axis of the record track than the angles of the other domains, even though the respective arrays of domains overlap each other, they may be separately detected by suitably aligned and angulated magnetic pickups or reproduction transducers, thus providing two or more different recordings along the same length of magnetic track.

Accordingly it is a primary objects of this invention to provide new and improved magnetic recording apparatus a method for recording two or more recordings along the same length of the same track of a magnetic record member.

Another object is to provide a magnetic recording system and method employing horizontal recording techniques wherein the recording density may be substantially increased by a factor of two or more.

Another object is to provide a magnetic recording system employing one or more magnetic transducers which may be controllably pivoted about their central axes to selectively align their field gaps for selectively recording different recordings defined by respective arrays of domains which are angulated differently than those of the other recordings.

Another object is to provide improvements in fixed head magnetic transducers capable of providing higher than normal density recordings in magnetic record members.

Another object is to provide improved methods for effecting high density magnetic recordings and improved recording arrangements allowing higher than normal recording densities with respect to record cards, discs and tape.

With the above and such other objects in view as may hereinafter more fully appear, the invention consists of the novel constructions, combinations and arrangements of parts as will be more fully described and illustrated in the accompanying drawings, but it is to be understood that changes, variations and modifications may be resorted to which

- 6 -

fall within the scope of the invention as claimed.

Brief_Description_of_the_Drawings

FIG. 1 is a side view of a modified magnetic transducer assembly including a disc or drum for supporting one or more magnetic transducers for use in recording on and/or reproducing from a magnetic record tape or a cylindrically deformed magnetic record card.

FIG. 2 is a side view of the transducer assembly of FIG. 1 with the transducer rotated to provide the azimuth or angle of its gap at a discrete and select angle to that of the gap of the transducer of FIG. 1.

FIG. 3 is a side view with parts broken away for clarity of a transducer assembly of the type employed in FIGS. 1 and 2.

FIG. 4 is a plan view of a magnetic disc drive employing a pivotable transducer assembly of the type illustrated in FIG. 3.

FIG. 5 is a side view of the magnetic disc and drive assembly of FIG. 4.

FIG. 6 is a face or plan view of the gap containing end of a portion of a magnetic head assembly showing two magnetic transducers disposed at right angles to each other and operable to scan and transduce with respect to the same track of a magnetic record member.

FIG. 7 is a face view of the gap containing end of a portion of a magnetic head assembly showing two magnetic transducers, the recording gap of each of which transducers is azimuthed or angulated differently with respect to a single record track of a record member which such transducers simultaneously scan and transduce information along.

FIG. 8 is an end or face view of the gap containing end of a magnetic head assembly having three magnetic transducers which are closely spaced with their recording-reproduction gaps aligned to scan the same record track of a magnetic record member, but each angulated differently from the others.

FIG. 9 is an end or face view of the gap containing end of a portion of a magnetic head assembly having two transducers which are offset or staggered with respect to each other, wherein each has a different gap angle for providing magnetic recordings or domains which overlap each other along the same record track.

FIG. 10 is an end or face view of a magnetic head assembly having a plurality of aligned magnetic transducers, each with a different gap azimuth for recording and reproducing a plurality of different digital recordings along the same length of the same record track of a magnetic record member.

FIG. 11 is a greatly magnified view of a portion of a magnetic record member showing a portion of a single record track thereof and magnetic domains defining pulse recordings of different information recorded along the same section of track wherein the domains of one recording have an azimuth or azimuths different from the domains of the other recording and wherein certain of the domains of one recording overlap respective domains of the other recording.

FIG. 12 is a view of a portion of a magnetic record member showing magnetic domains of one recording partially overlapping the domains of another recording along the same track area.

FIG. 13 is a face view of a magnetic recording at a select location of a magnetic record member which recording is formed of four magnetic domains, each at an azimuth or longitudinal angle which is different from that of the others a degree such that each may be separately detected.

FIG. 14 is an end or face view of a portion of a magnetic head assembly showing two closely spaced magnetic transducers with pole gaps constructed to provide recordings in the form of magnetic domains which are differently aligned as a result of differently orienting such pole gaps.

FIG. 15 is a face view of a portion of a magnetic head having two closely spaced magnetic transducers, one for recording and the other for reproducing digital magnetic signals and applicable to the transducer arrangements illustrated in others of the drawings.

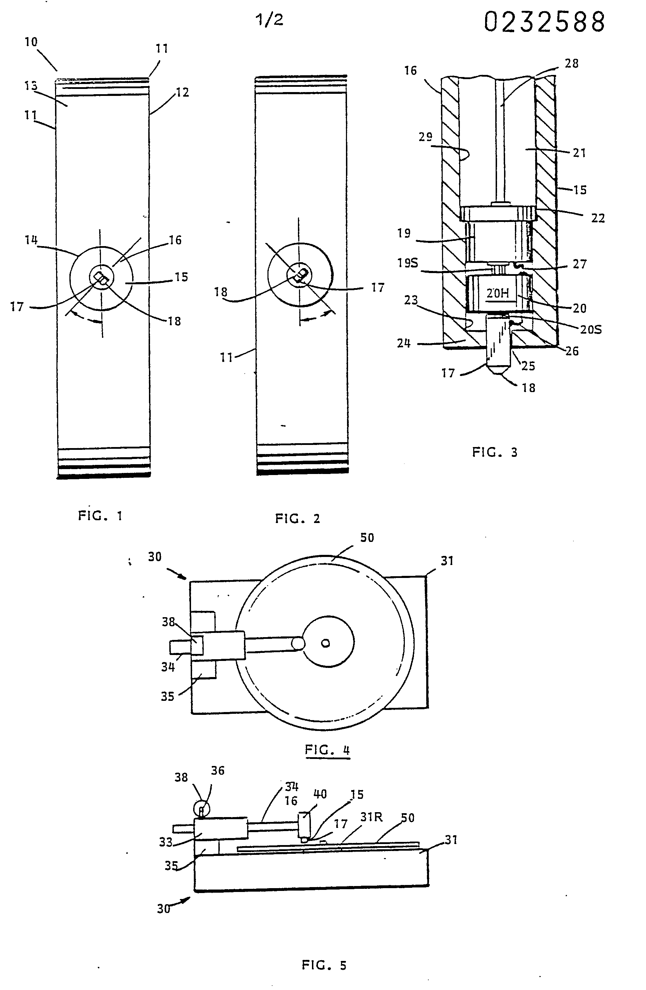

In FIGS. 1 to 3 is shown details of a magnetic recording and reproduction apparatus which is capable of recording digital record signals, such as audio, video or computer generated signals along parallel tracks of a flexible magnetic tape, card, disc or drum as relative movement is effected between a stationary or rotating head or heads and a magnetic recording member, such as a tape which is driven around the peripheral surface of the drum or disc as it rotates or along parallel tracks of a cylindrically deformed magnetic record card against which the disc or drum rotates. Conventional magnetic bit or pulse code recording is effected by energizing a magnetic recording transducer with pulse signals to cause a magnetic field to be intermittently generated across the recording gap of the transducer in the vicinity of the surface of the magnetic recording member and generating such pulse recordings as a multitude of closely spaced magnetic domains, the longitudinal axes of which extend parallel to each other at an angle with respect to the longitudinal axis of the track of the record member, which angle depends upon the angle of the gap of the transducer.

To further increase recording density in such a magnetic recording arrangement, means are provided in FIGS. 1 to 3 for effecting two or more information or data recordings, such as programs or respective streams of data, along the same length of a magnetic record track of a magnetic card, tape, disc or drum, using an apparatus having a magnetic recording transducer or transducers which are modified to permit the recording and/or reproduction head or heads or the operating ends containing the field gaps, thereof to be power pivotted or rotated between two or more different angular positions, at each of which angular positions the recording head may record information in digital or pulse form by providing respective magnetic domains which are substantially similarly angled for each recording or program but which are differently angled with respect to the longitudinal axis of the record track than other data recordings provided therealong, such as other streams of data or programs which may be simultaneously or sequentially recorded along the same track. By similarly pivotting and aligning a magnetic transducer utilized to reproduce from a selected recording or program from a record track containing a number of different recordings or programs which are respectively defined by respective groups of magnetic domains recorded with their axes extending in the same direction or parallel to each other, such reproduction transducer will sense only one of such multiple recordings (eg-that with which its pole pieces are properly aligned) to the exclusion of the other recordings therealong and having magnetic domains extending at an angle or angles to a longitudinal axes of the magnetic domains of the selected recording. Each of the multiple recordings is thus rendered discrete from the others depending upon the angle of which its domains or bit recordings extend with

- 12 -

respect to the axis of the record track. Such technique may be utilized to provide a means for substantially increasing the total amount of data which is recorded on a single magnetic record member, such as a magnetic tape, rigid or flexible disc, magnetic card, drum or the like.

In FIG. 1, a magnetic recording apparatus 10 includes an assembly 11 including a drum or disc-shaped support 12 which has one or more magnetic transducers 17 supported thereby, which transducer or transducers are shown as both rotatable about an axis and projectable in the direction of such axis from the peripheral surface 13 of the disc or drum 12, in a manner to permit the operating end of the transducer to engage or become disposed in close operable relationship with a magnetic record or tape as the support 12 is power rotated. Each transducer 17 is pivotally rotatable about an axis which extends radially with respect to the drum or disc 12 to permit either or both the magnetic recording and reproduction of two or more discrete recordings of data or programs along the same length of the same record track, wherein each recording or program is defined by magnetic domains, the axes of which extend parallel to each other or are similarly angled with respect to the longitudinal axis of the track. Such domains are differently angled with respect to the domains of one or more other recordings or programs extending along the same track length, each of which is recorded by the same or different magnetic recording heads during recording operations when the magnetic pole pieces thereof are at respective select angles with respect to the direction or longitudinal axis of the record track of the magnetic recording member. As such, the differently angled domain recordings permit the selective reproduction of each of such recordings to the exclusion of and without interference from the other one or more program recordings.

In FIG. 1, a cylindrical bore 14 is provided in the body of the disc or drum shaped housing 12, which bore extends to the peripheral surface 13 of the peripheral wall of the disc shaped housing 12. Force fitted within such bore 14 is an elongated cylindrical housing 16 forming part of an assembly 15 which includes a magnetic transducer 17 and a plurality of actuators or motors for both pivotally and axially driving the transducer or transducers 17 thereof to permit its gap angle to be selectively changed and the

- 14 -

transducer or transducers to be engaged against or operatively close to the surface of a magnetic record member.

Transducer 17 may comprise either or both a magnetic recording and reproduction head, depending on the manner in which its induction coil or coils are wired and extend. The operating end 18 of the magnetic transducer 17 consists of a convention pole piece assembly which has been pivotted counterclockwise, as viewed, and is shown angled 45$^{\circ}$ to a plane passing through the central axis of the transducer and the center of the circular record track of the record member being scanned.

In FIG. 2, the transducer 17 is shown rotated and positioned at right angles to the position shown in FIG. 1 or 45$^{\circ}$ to the other side of the described plane allowing it to record or reproduce information defined by magnetic domains which extend at right angles to the direction of the domain defined by the recordings effected by the transducer when in the position shown in FIG. 1.

FIG. 3 shows details of the transducer 17 and its positioning means, which comprise a miniature

0232588

- 15 -

push-pull solenoid or lineal actuator 19 and a rotary solenoid 20. The solenoid 19 is secured or force fitted in a first bore 22 defining part of the interior volume 21 of the elongated cylindrical housing 16. The stepped cylindrical wall of the solenoid housing conforms to the surface 22 of the bore 21, while the lower portion of the side wall of such lineal solenoid conforms to lower wall surface 23 having a reduced diameter at the end of the bore. A rotary solenoid or stepping motor is secured to the output shaft 19S of the solenoid 19 and its housing 20H is slidably engaged with the cylindrical bore 23 to permit it to move longitudinally therethrough as solenoid shaft 19S is actuated. The magnetic transducer or head 17 is secured to the power rotated output shaft 20S of the rotary solenoid or motor 20 and extends through an opening 25 in the end wall 24 of the elongated housing 16. Shaft 19S of solenoid 19 is preferably assembled and constructed to prevent its rotation so that the only rotation which can be imparted to the transducer 17 is that which results from rotation of the output shaft of rotary solenoid 20.

Notation 26 refers to a slack flexible conducting cable extending from the operating element or coils of the transducer 17 to solenoid housing 20H. Notation 27 refers to a second flexible cable containing the wires of cable 26 plus wires connected to the energizing input of the rotary solenoid 20 and extending therebetween and the housing for the lineal solenoid 19. A third electrical cable 28 extends from the solenoid 19 to suitable commutating means located near the center of the drum or disc-shaped housing 12 and contains all of the above described wires plus wires connected to the energizing input of solenoid 19.

The transducer support and actuator assembly 15 may be modified, depending on transducing and scanning requirements. For example, the entire assembly 15 or the head 17 may be supported to permit the head to float or to be retained .0002" or so away from the record member by the Bernouli effect, thus precluding the need for a lineal actuator of the type described. Air may also be forced from the interior of the housing 16 through a passageway in or between the transducer 17 and the opening 25 in the end wall 24 of the housing to provide such a gap between the end 18 of the transducer 17 and the flexible or rigid record member. The solenoid 19 may also be air operated with air pressurized by a pump or fan connected to the interior volume 21.

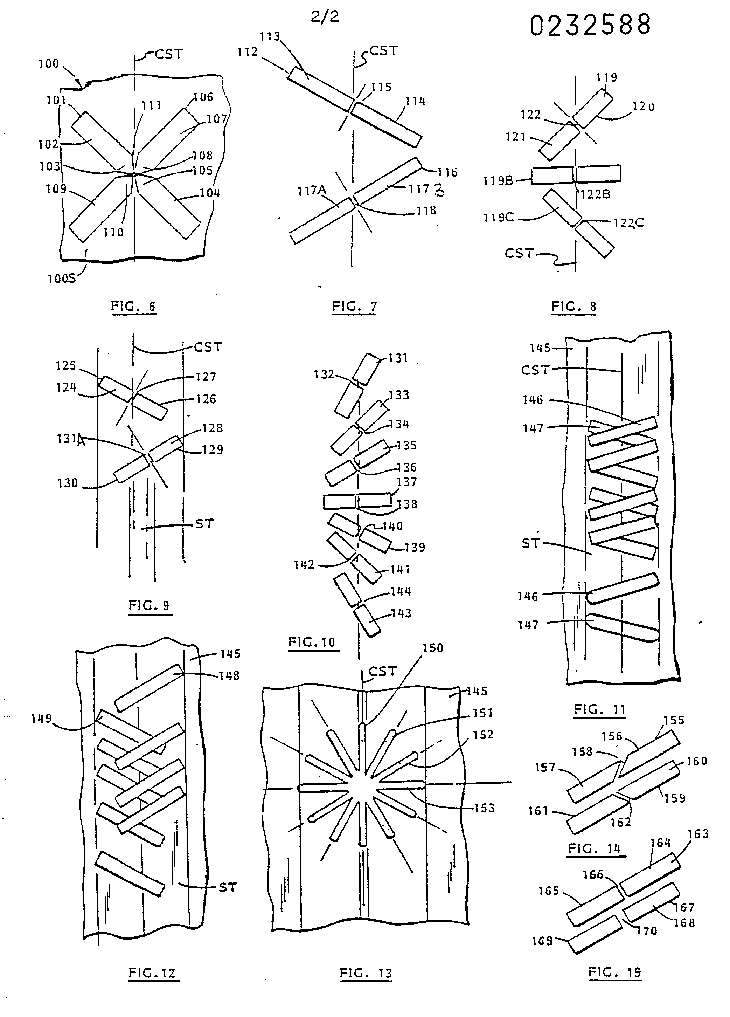

The transducer assembly 16 or a modified form thereof may be employed to support and selectively pivot one or more transducers with respect to selected magnetic recording tracks of a magnetic tape, rigid or flexible disc or card. In Figs. 4 and 5 is shown a disc drive for a flexible or rigid magnetic recording disc 50. The disc drive assembly 30 is supported on a base 31 which supports a constant speed gear motor (not shown) and a turntable 31R supporting the record disc 50 beneath an assembly including a support 35 for a lineal bearing 33 supporting an arm 34 for radial movement therethrough with respect to the rotating disc 50. Supported at the end of arm 34 is a housing 40, equivalent to housing 16 and containing similar components including a magnetic transducer 17 or a bank of transducers which may be projected towards and away from the magnetic recording surface of the disc and rotated between two or more angular positions as described. Supported on the housing for bearing 33 is a reversable gear motor 38 and a drive 36 operable to permit such motor to rapidly drive the arm 34 to position the transducer 17 in operable alignment with any selected track of the disc. Conventional drive and control means may be employed for effecting rapid controlled reverse drive of the arm 34 across the rotating magnetic disc 50. Magnetic transducer assembly 16 is supported in a housing 40H which positions the end of the magnetic transducer 17 or a plurality of transducers immediately above, floating or in engagement with the upper surface of the magnetic disc 50 to permit it to selectively transduce different recordings from the same length of the select circular record tracks, as described above, by the controlled and selective rotation of the transducer between two or more rotational positions.

The above described lineal and/or rotational driving movements and the selective positioning of the transducer, as well as the other operations of the described magnetic transducing apparatus, are preferably all under the control of an electronic computer or micro-processor so as to effect the selective recording and/or playback of data with respect to the magnetic recording member.

In Fig. 6 is shown a portion of a magnetic head 100 composed of one or more arrays of magnetic transducers supported by a substrate 100S, which is supported adjacent a magnetic record member, as described, for recording on and/or reproducing record signals from a magnetic record card, tape or disc. Two magnetic heads 101 and 106 are shown with their magnetic pole pieces 102, 104 and 107, 109 aligned and at right angles to the pole pieces of the other. Notations 103, 105, 108 and 110 refer to tapered portions of respective ones of the pole pieces 102, 104, 107 and 109, the ends of which define the respective transducing gaps of the heads 101 and 106. Both heads thus share a common gap area or volume across which respective magnetic fields or flux lines are generated at right angles to each other so as to provide respective tive arrays of magnetic domains in the same recording track of the magnetic record member scanned by the head 100, each of which arrays contain domains which are angled or azimuthed at a right angle to the longitudinal axis of the other domains formed by the magnetic field of the other head. The magnetic transducers 101 and 106 may be formed by so-called thin film fabrication techniques of Permalloy magnetostrictive materials, such as vapor deposited

- 20 -

iron-manganese or nickel-iron alloys, as described in the March 1982 and March 1984 issues of the Journal of Applied Physics and may be but one pair of a plurality of closely adjacent pairs of similarly constructed assemblies of magnetic transducers.

Each of the transducers 101 and 106 may be simultaneously and/or sequentially energized with respective streams of digital data for the simultaneous or sequential recording of different programs, messages or streams of information along the same end or different portions of the same magnetic record track.

Fig. 7 illustrates a modified form of the magnetic transducing arrangement of Fig. 6 and schematically shows the attitude of two magnetic transducers 113 and 116 which are formed on a common substrate, as described, closely adjacent to each other and are operable to record respective signals or trains of data along the same record track, the axis of which track is denoted CST. One transducer 113 is formed of aligned magnetic pole pieces 112 and 114 having a magnetic recording and/or reproduction transducing gap 115 separating the operating ends of such pole pieces.

Such transducer is angled on its support to provide the longitudinal axis or azimuth of the gap 115 at an acute angle which is clockwise of the track axis CST while the other transducer 116 is disposed on the same support or head substrate with its pole pieces 117A and 117B separated by a transducing gap with its axis at an acute counterclockwise angle to the longitudinal axis CST of the same track. The magnetic domains thus aligned or formed along the same record track by respective pulses of magnetic field energy across the two gaps are thus at respective azimuths or angles which are such that they may be separately reproduced from the same length of record track by respective magnetic reproduction transducers angled as in FIG. 7. As in FIG. 6, a plurality of additional pairs of similarly disposed transducers for recording on and/or reproducing from the same lengths of the same record track of a magnetic record member may be provided on a common support or substrate to provide a bank or banks of such transducers which may be used with the apparatus described above or modifications thereof.

In FIG. 9 is shown a transducer arrangement composed of two transducers 124 and 128 which are supported on a common substrate as described. Transducer 124 has pole pieces 125, 126 separated by a gap 127 for recording and/or reproducing signals in the form of domains in the magnetic recording material of a selected track ST of a magnetic record member as described, which magnetic domains are formed at an azimuth angle or are angulated at an acute angle which is clockwise of the centerline CST of the selected record track. Transducer 128 has the centerline of its gap 131A offset from the centerline of the gap 127 of transducer 124, a degree less than the width of a record track and is angulated at an acute angle which is counterclockwise to the longitudinal axis CST of the selected magnetic record track. The two transducers may thus be employed to provide respective arrays of magnetic domains, certain or all of which partly overlay, as shown in FIG. 12. The substrate or support containing the transducers staggered transucers in side-by-side, closely spaced arrays and/ or additional transducers of the same array which are additionally offset and differently angled with respect to the longitudinal recording axis of a track or closely spaced parallel tracks of a magnetic record member.

0232588

- 23 -

FIG. 10 shows an array of seven transducers denoted 131, 133, 135, 137, 139, 141 and 143, closely supported on a common head or substrate and having respective signal recording and/or reproduction gaps denoted 132, 134, 136, 138, 140, 142 and 144 which are longitudinally aligned to record along a common magnetic record track. However, each of the seven transducers and its gap are angulated differently from the others to provide respectively angulated arrays of magnetic domains along the same length of a record track, each of which arrays may be separately detected by a magnetic pickup having a respectively aligned magnetic field gap. As in FIG. 9, two or more of the multiple transducers of FIG. 10 may be offset from the others to provide respective arrays of magnetic domains, as recordings, which partially overlap.

In FIG. 11 is shown two separate recordings along the same length of a single magnetic track of a magnetic record member formed by the transducing arrangements of FIGS. 6 or 7 or of those of FIGS. 8 and 10 when two of the recording transducers thereof are separately energized with pulse recording information such as digital recording signals. The record member 145 has a record track ST, the centerline CST of which is aligned with the recording axis of a plurality of magnetic transducers, such as 113 and 116 which respectively receive and are energized with respective streams of digital data or pulses defining respective recordings to be made. Gaps 115 or 144 may be employed, for example, to record a plurality of domains 146 extending at one angle to axis CST after gaps 117A or 132 have recorded a plurality of spaced-apart domains 147 which define a recording different from the recording defined by the overlapp-code recordings provided by each transducer, not all of the domains will overlap, as illustrated. Some domains will be completely spaced apart, as shown, while others will overlap different degrees, but no two overlapping domains will completely cover or mask the other, thus permitting each domain to be detected or sensed by a properly aligned pickup or reproduction head.

In FIG. 12 a record track ST of a record member 145 is shown containing two arrays of domains 148 and 149, the latter being first recorded along the left side portion of the track after which the array of domains 148 are recorded along the right side portion of the same track such as by staggered transducers arranged as illustrated in FIG. 9. Here again, the degree of overlapping will depend on the timing and nature of the digital or code signals of each recording or message applied to the respective transducers and certain of the domains will be free of overlapping when recorded while the transducer for recording the differently angled adjacent domain array is not energized. The recording arrangement shown in FIG. 12 may be modified to provide additional arrays of adjacent domains at angles which are different than those shown. Left and right side domain arrays may also be formed of domains which are parallel and/or laterally aligned for detection by respectively staggered pickups with suitably directed detection magnetic field gaps.

In FIG. 13 is shown a pulse recording at a single recording location. The recording is composed of either four domains 150, 151, 152, 153 or eight domains, the longitudinal axes of which extend through a point or common recording area of a select record track ST of a magnetic record member 145. Each of the differently angulated domains may be recorded by a respective of a plurality of differently angulated transducer, such as illustrated in FIG. 10 or by a single pivotable transducer of the type shown in FIG. 3 during consecutive scanning sweeps of the track ST while the transducer thereof is driven to a different recording angle by a selectively operated stepping motor or solenoid, as described.

FIG. 14 illustrates yet another arrangement of magnetic transducers on a common substrate for providing plural magnetic recordings along the same length of magnetic record track with one or both recordings formed of magnetic domains which overlap the domains or recordings of the other. Two magnetic transducers 155 and 159 are shown, each composed of respective pairs of pole pieces 156, 157 and 160, 161 which are aligned with each other and extend parallel to the aligned pole pieces of the other. However, the gaps 158 and 162 of the respective heads are angulated with respect to each other and are aligned so as to provide respective magnetic recordings which extend along the same track and may overlap but are separately detectable by respective pick-ups or sensors of the same or different heads.

FIG. 15 shows a magnetic recording transducer 163 and a magnetic reproduction transducer or pick-up 167 respectively formed of pole pieces 156, 157 and 168, 169 supported on a common substrate or head, as described, and extending substantially parallel and close to each other in the manner such that the recording gap 166 of the recording transducer 163 extends in the same direction as the sensing or pick-up gap 170 of the reproduction transducer 167. In other words, both gaps are similarly angulated with respect to the longitudinal axis of a common record track of a magnetic record member when the record member and the head or substrate supporting the two transducers are properly aligned for scanning by either or both said transducers during a recording and/or reproduction operation. The width of the recording gap 166 is shown as less than the width of the reproduction gap 170 in accordance with known design practice and requirements for effecting suitable magnetic recording along narrow record tracks of magnetic recording members such as tape, discs and cards.

A plurality of closely spaced pairs of magnetic recording and reproduction transducers may be provided aligned or offset as illustrated in substitution for each or a select number of the single magnetic transducers illustrated.

- 28 -

In a particular method of recording and reproducing digital data in the form of streams of digital codes, such as binary codes and the like, along a selected track or tracks of a magnetic record member, a single message or stream of such digital data may be simultaneously applied to two recording transducers, the recording gaps of which are longitudinally aligned with the recording track but differently angulated, as in FIG. 7 to permit the simultaneous recording of the same data along the same track and in the form of respective arrays of domains, which are respectively angulated and overlap as in FIGS. 11 to 13 so as to permit the recordings of each array to be simultaneously reproduced and compared in an electronic comparator to provide a parity check or system for automatically ascertaining if digital data is properly recorded, wherein the need for extra recording tracks is eliminated as the two arrays of recordings are recorded along the same length or lengths of the same track and selectively reproduced therefrom as described.

Further modifications to the apparatus and methods described above are noted as follows:

1.  The magnetic record card employed in the magnetic recording and reproduction apparatus illustrated may be formed of a suitable plastic film, such as one to two mil thick polyester film, and, in a preferred form, is approximately 8" x 10" or letter size and supported within a flat rigid housing 1/8" to 1/2" thick made of suitable engineering plastic, permitting the record member and its container to be properly stored in a conventional letter file and easily transported or mailed. Such flat card containing housing may contain a spring-biased-closed openable end door to permit machine access to the card therein to permit the card to be machine removed from and returned to the housing. To effect such machine removal and replacement, rigid plastic strips or bars may be secured to the ends of the card and adapted to slidably support the card for longitudinal movement through the housing with the ends of the strips or bars slidably assembled in respective grooves molded in the inside surfaces of the side walls of the housing which serve as guide tracks therefore. A suitable coil spring or springs fastened at its ends to the end wall of the housing and the endmost lateral strip may be employed to pull the card back into the housing after it has been half removed from the other

0232588

- 30 -

end of the housing and driven around the cylindrical support for transducing as described. The card may also be returned into the housing and the door to the housing closed by the same machine elements used to open the door and partly pull the card therefrom for transducing thereon as described. Recording may thus be effected on either or both sides of half a card if the housing is turned over and the card is coated for two side recording, assuming, of course that the card removal mechanism is operable to open and close the end door of the housing when either side of the housing is facing upwardly.

2. In a modified form of the apparatus described above, a flexible magnetic card of rectangular shape, such as letter size, may be coated on both sides with magnetic recording material wherein substantially the entire coated areas of both sides are used for magnetic recording and reproduction. This may be effected by either machine removing the entire card from the described flat housing therefore and machine manipulating same to effect the described semi-cylindrical deformation of the card from either end of the card with either of the surfaces of the card facing inward when it is so deformed so that

- 31 -

transducing operations, as described, may be effected with respective to a selected half-surface of the card, or by selectively removing half the card from one of the two ends of the housing by opening one of two end doors to the housing at the end of the housing inserted into the reader-recording unit.

3. In a modified form of the recording-reproduction head arrangement shown in FIG. 15 both the transducers 163 and 167 may be formed by thin film fabrication closely adjacent to each other or in overlaping relation and such construction may be applied to the embodiments of FIGS. 6-10 to provide both recording and reproduction transducers with their gaps sharing the same axis or two or more recording or reproduction transducers, angulated as shown, and sharing the same transducing axis.

0232588

- 32 -

<u>CLAIMS</u>

1. Magnetic recording apparatus comprising:

a) a first support,

b) first means supported by said first support for supporting a magnetic record member,

c) second means supported by said first support including a recording magnetic transducer having aligned pole pieces and operable to magnetically transduce data with respect to said magnetic record member supported by said first support,

d) means for effecting relative scanning movement between said first and second means to permit said transducer to transduce information with respect to a select record track of said magnetic record member; the improvement comprising:

e) means for controllably moving said transducer in a manner to selectively change the attitude of its pole pieces to permit it to record data defining at least two discrete magnetic recordings along the same length of the same record track of said magnetic record member, wherein a first of said magnetic recordings is defined by magnetic domains which extend in a first direction in the recording material of a select track of said magnetic record member and another of said magnetic recordings is defined by magnetic domains which extend in a second direction in the magnetic recording material of the same record track of said record member but at an angle to the longitudinal axis of said track which is different from the angle defined by the first direction in which said domains of said magnetic recordings extend.

2. Magnetic recording apparatus in accordance with claim 1 wherein said means for controllably moving said magnetic transducer comprises means for controllably rotating same about an axis passing through the record track of said magnetic record member when said transducer is operatively aligned with said record member and said record track.

3. Magnetic recording apparatus in accordance with claim 2 wherein said means for controllably rotating said magnetic transducer includes an electrically operated motor means.

4. Magnetic recording apparatus in accordance with claim 3 wherein said electrically operated motor means comprises a bistable solenoid.

5. Magnetic recording apparatus in accordance with claim 1 wherein said means for effecting relative scanning movement between said first and second means comprises means for power rotating one of said first and second means with respect ot the other while said recording transducer is in operable alignment with a select track of said magnetic record member and while the pole pieces of said recording magnetic transducer are operatively aligned in a select direction with respect to said magnetic record member.

6. Magnetic recording apparatus in accordance with claim 5 including magnetic signal reproduction means forming part of said second means and operable to selectively reproduce the magnetic recordings made by said recording transducer when aligned in one of said first and second directions to the exclusion of the recordings made thereby when aligned in the other of said directions.

7. Magnetic transducing apparatus comprising:

a) a first support,

b) first means supported by said first support for predeterminately supporting and positioning a magnetic record member,

c)    second means supported by said support for magnetically recording digital information signals with respect to a select record track of a magnetic record member supported by said first means,

d)    said magnetic recording means comprising first and second magnetic recording transducers, each having respective magnetic pole means and a recording gap across which respective pulsed magnetic fields may be generated for effecting respective magnetic recordings in a select track of a magnetic record member adjacent thereto in the form of magnetic domains which are predeterminately aligned by the magnetic fields applied across said gaps,

e)    said first magnetic recording transducer being aligned and operable to record digital pulse recordings defined by magnetic domains which are aligned in a first direction in the magnetic recording medium of a magnetic record member supported by said first means,

f)    said second magnetic recording transducer being aligned and operable to record digital pulse recordings defined by magnetic domains which are aligned in a second direction in the magnetic recording medium of said magnetic recording member when supported by said first means wherein said first and second directions are sufficiently angulated with respect to each other to permit the recordings made by said first and second recording transducers to be separately detectable to the exclusion of the other recording when said recordings are generated along a common record track of said magnetic record member.

8. Magnetic transducing apparatus in accordance with claim 7 including a common support for fixedly supporting said first and second magnetic transducers with respect to each other.

9. Magnetic transducing apparatus in accordance with claim 8 wherein said first and second magnetic recording transducers are aligned on said common support to permit both to simultaneously scan the same record track of a magnetic record member supported and predeterminately positioned on said first support.

10. Magnetic transducing apparatus in accordance with claim 7 wherein said plurality of magnetic transducers are disposed and aligned to share a common pole piece gap for recording.

11. Magnetic transducing apparatus in accordance with claim 7 wherein said first and second magnetic recording transducers have recording gaps which are staggered with respect to the center line of a magnetic record track of a magnetic record member with which said magnetic recording means is operatively aligned.

12. Magnetic transducing apparatus in accordance with claim 7 including first and second magnetic reproduction transducers and a common support supporting all of said transducers, said first reproduction transducer being aligned on said common support to sense magnetic recordings provided on said record member by said first magnetic recording transducer to the exclusion of the recordings made by said second recording transducer, said second reproduction transducer being aligned on said common support and operable to sense and reproduce magnetic recordings made by said second recording transducer to the exception of the magnetic recordings made by said first recording transducer, said first and second recording tranducers being operable to simultaneously scan the same record track of a record member which is predeterminately positioned on said first means.

13. A method for magnetically recording information along a select record track of a magnetic record member comprising

a) pivotally supporting a magnetic recording transducer on a mount aligning said transducer in operable relation with respect to a select track of a magnetic record member which is supported adjacent said mount,

b) power operating a drive means to cause it to pivot said magnetic recording transducer so as to cause it to assume a first select angular attitude with respect to the longitudinal axis of said select track of said magnetic record member,

c) effecting controlled relative scanning movement between said record member and said transducer while controllably energizing said transducer with first digital information signals to cause said transducer to record first digital information along a select portion of said select track of said record member,

d) thereafter power operating said drive means to cause it to pivot said magnetic recording transducer to cause it to assume a second angular attitude with respect to the longitudinal axis of said select track of said magnetic record member, and

0232588

- 39 -

e) effecting controlled relative scanning movement between said record member and said transducer while energizing said transducer with second digital information signals to cause said transducer to record second digital information along a select portion of said select track of said record member.

14. A method in accordance with claim 13 wherein the controlled relative scanning movements between said transducer and said record member while said transducer is energized with both said first and second digital information signals, occur while said transducer is operatively scanning the same portion of said select record track of said magnetic record member and wherein said first digital signal recordings are defined by first magnetic domains which are selectively aligned in the magnetic recording material of said record member in a first direction and said second digit recordings are defined by second magnetic domains which are aligned in the magnetic recording material of said select track in a second direction, and wherein said first and second directions are sufficiently angulated with respect to each other to permit each of said first and second digital recordings to be selectively detected and reproduced from said record member to the exclusion of the other.

15. A method for magnetically recording digital information on magnetic recording members comprising:

a) providing a plurality of magnetic recording transducers on a common support defining a magnetic head, wherein each of said transducers contains a recording gap for recording digital signal information defined by aligned magnetic domains formed in the magnetic recording material aligned with said gap when the transducer is energized, and wherein the lateral axis of the gap of each transducer is angulated differently than the lateral axis of at least one of the other transducers,

b) effecting controlled relative scanning movement between said common support and a magnetic record member disposed in recording relation with respect to said head, in a first direction while a first of said transducers is substantially aligned with a select record track of said record member, and

c) while such alignment and scanning movement is effected, applying first digital information signals to energize a first of said transducers to

- 41 -

cause same to effect a first digital signal recording along a select length of said record track of said record member wherein said first digital signal recording is defined by a first array of first magnetic domains in the recording material of said magnetic record member which first domains are all substantially similarly angulated with respect to the longitudinal axis of said track of said magnetic record member, and

d) generating and applying second digital information signals to energize a second of said recording transducers while relative scanning movement is effected between said second transducer and at least a portion of the same length of said magnetic record track scanned and recorded along by said first transducer and while said second transducer is aligned with said select record track to cause said second transducer to effect a second digital signal recording along such portion of the same length of said record track containing said first recording wherein said second recording is defined by a second array of magnetic domains which are substantially similarly angulated at an angle to the longitudinal axis of said select track of said record member but extend at a sufficiently different angle to direction of the domains of said first digital signal recordings to permit said first and second arrays of magnetic domains to be separately sensed during a reproduction transducing operation to the exclusion of the domains which are not similarly aligned and which extend along the same record track.

16. Magnetic transducing apparatus for recording information on flexible magnetic record cards comprising:

a) first means for supporting a flexible magnetic record card in an arcuate formation defining a portion of a cylinder with the inside surface of the arcuately formed card containing magnetic recording material,

b) magnetic recording transducing means operable for magnetically recording information with respect to a plurality of record tracks provided in said magnetic recording material of a record card supported by said first means and deformed in the shape of a partial cylinder wherein the parallel record tracks of said card form respective parallel circular track formations which extend around the inside surface of said deformed card,

c)    second means for rotationally supporting said transducing means within said first means and a magnetic card which is arcuately supported thereon to permit said transducing means to operatively scan the inside recording surface of the card,

d)    third means for effecting controlled powered rotary movement between said first means and said transducing means,

e)    fourth means for effecting powered lineal movement between said transducing means and said first means to operatively bring said transducing means into scanning relation with select tracks of said card,

f)    fifth means for energizing said transducing means with select record signals when said transducing means is operatively scanning a select circular track of said card to cause said transducing means to magnetically record select information along said select card track,

g)    sixth means including magnetic pick-up supported by said second means and rotatable with said recording transducing means for selectively reproducing information from selected tracks of a

- 44 -

magnetic card arcuately supported by said first means, and

h)    seventh means for controllably energizing said magnetic pick-up when it is operatively aligned with a select track of a card operatively supported by said first means to cause said magnetic pick-up to transduce magnetic recordings of information recorded on said select track of said card.

17.    Magnetic transducing apparatus in accordance with claim 16 including means for effecting controlled rotation of both said magnetic recording transducing means and said magnetic pick-up about their longitudinal axes to respectively dispose both at selected different angles with respect to the direction of the semi-circular record tracks scanned thereby to permit said magnetic recording transducing means to effect magnetic recordings defined by magnetic domains which are selectively angled with respect to the longitudinal axis of a record track and to permit said magnetic pick-up to selectively reproduce selected of said recordings defined by domains which are angled in accordance with the angle to which said pick-up is rotated on said second means.

18. Magnetic transducing apparatus in accordance with claim 16 wherein said magnetic recording transducing means comprises first and second transducers supported by said second means for effecting simultaneous scanning movement with respect to the same record tracks of a magnetic card operatively supported by said first means, wherein said first and second transducing means each have a recording gap which is angulated differently from the gap of the other to permit each to effect respective recordings defined by respective arrays of magnetic domains which are respectively differently angulated.

19. Magnetic transducing apparatus in accordance with claim 16 wherein said fifth and seventh means includes means for sensing relative longitudinal movement between a record card supported by said first means and said second means and means connected to said sensing means for generating a control signal when said second means is predeterminately located with respect to said first means and the magnetic recording and pick-up transducers supported thereby are operatively aligned with a select track of a magnetic record card supported by said first means and means for applying said control signal to control either said fifth or seventh means to energize said recording transducing means to effect a select recording along said select track of said card or said pick-up to reproduce signals recorded along said select track of said card.

20.   Apparatus in accordance with claim 19 wherein said means for generating said control signal includes scanning means supported by said second means for scanning track locating recordings on a record card and generating corresponding output signals as said fourth means operates to effect said lineal movement between said first means and said transducing means.

1/2

0232588

FIG. 1

FIG. 2

FIG. 3

FIG. 4

FIG. 5

FIG. 6

FIG. 7

FIG. 8

FIG. 9

FIG.10

FIG. 11

FIG.12

FIG. 13

FIG. 14

FIG. 15